(19) **Europäisches Patentamt / European Patent Office / Office européen des brevets**

(11) **EP 1 290 435 B1**

(12) **FASCICULE DE BREVET EUROPEEN**

(45) Date de publication et mention de la délivrance du brevet:
**14.06.2017 Bulletin 2017/24**

(21) Numéro de dépôt: **01945441.2**

(22) Date de dépôt: **14.06.2001**

(51) Int Cl.:
**G01N 29/44** *(2006.01)*

(86) Numéro de dépôt international:
**PCT/FR2001/001860**

(87) Numéro de publication internationale:
**WO 2001/096855 (20.12.2001 Gazette 2001/51)**

(54) **DETECTION DE DEFAUTS COUCHES SUR PRODUITS METALLIQUES EN CONTROLE NON DESTRUCTIF PAR ULTRASONS**

ZERSTÖRUNGSFREIE ULTRASCHALLPRÜFUNG VON LIEGENDEN FEHLERN IN METALLISCHEN PRODUKTEN

DETECTING LYING DEFECTS ON METAL PRODUCTS BY NON-DESTRUCTIVE ULTRASONIC CONTROL

(84) Etats contractants désignés:
**AT BE CH CY DE DK ES FI FR GB GR IE IT LI LU MC NL PT SE TR**

(30) Priorité: **16.06.2000 FR 0007729**

(43) Date de publication de la demande:
**12.03.2003 Bulletin 2003/11**

(73) Titulaire: **VALLOUREC & MANNESMANN TUBES**
**92100 Boulogne-Billancourt (FR)**

(72) Inventeurs:
• **BISIAUX, Bernard**
**59300 Valenciennes (FR)**

• **DETOURNAY, Michèle**
**91090 Lisses (FR)**

(74) Mandataire: **Plaçais, Jean Yves**
**Cabinet Netter**
**36, avenue Hoche**
**75008 Paris (FR)**

(56) Documents cités:

| | |
|---|---|
| DE-A- 3 614 002 | DE-B- 2 704 132 |
| FR-A- 2 436 393 | FR-A- 2 471 584 |
| FR-A- 2 670 583 | GB-A- 2 059 061 |
| GB-A- 2 075 678 | US-A- 4 799 168 |
| US-A- 5 280 723 | |

**Description**

L'invention concerne le contrôle automatique non destructif par ultrasons de produits métalliques, notamment de tubes métalliques.

Le document DE 3 614 002 concerne un procédé d'examen de pièces mécaniques par ultrasons avec déplacement à vitesse constante relative d'une tête à ultrasons par rapport à la pièce, émission d'impulsions ultrasoniques pendant le mouvement. Les amplitudes d'écho d'une profondeur particulière sont déterminées. Une moyenne est effectuée et comparée à un seuil. Le dépassement du seuil est interprété comme un défaut non tolérable.

Le document GB 2 075 678 concerne un procédé de test non destructif de tube ou de barre sur la base du temps de transmission d'une impulsion.

Le document FR 2 471 584 concerne l'enregistrement de signaux récurrents dont la durée est courte par rapport à la période de récurrence sur un enregistreur dont la bande passante est inférieure au spectre utile des signaux.

La fabrication des tubes métalliques est rendue autant que possible complètement automatique. En sortie de fabrication et en ligne avec celle-ci, les tubes peuvent être soumis si nécessaire à un contrôle automatique non destructif par ultrasons.

Classiquement, cette technique utilise des capteurs ou palpeurs à ultrasons, entraînés en rotation à une vitesse de quelques milliers de tours par minute, autour d'un tube défilant à une vitesse linéaire qui peut aller jusqu'à 2 mètres par seconde environ. Le couplage du capteur au tube, indirect, s'effectue dans un liquide, en général de l'eau. En pratique, on prévoit différents capteurs à ondes ultrasonores longitudinales, qui "insonifienf" le tube selon des angles d'incidence différents. Les angles d'incidence sont définis en fonction de nombreux paramètres, dont les dimensions du tube, ses propriétés de transmission ultrasonore, les types de défauts recherchés, et surtout la nécessité d'une transition entre ondes longitudinales et ondes transversales à l'interface liquide/tube (et réciproquement). Les capteurs fonctionnent alternativement en mode d'émission d'impulsions ultrasonores et de réception des échos de ces impulsions renvoyés par divers réflecteurs situés dans le produit et permettent ainsi de récupérer les échos provenant d'imperfections du produit contrôle. La fréquence de récurrence est la fréquence de tir des impulsions émises par ces capteurs. Les signaux d'échos, une fois amplifiés, permettent d'isoler les tubes susceptibles de présenter des défauts par comparaison de leur intensité avec celle d'informations stockées issues du passage préalable de défauts "de référence" ou "défauts étalons".

Ainsi, il est possible de détecter sélectivement les défauts d'orientations sensiblement longitudinale et/ou transversale, situés au voisinage de la surface intérieure et/ou extérieure des produits ainsi que les défauts de type dédoublure dans l'épaisseur des produits ;

on peut contrôler également les diamètres intérieur et extérieur des produits et leur épaisseur.

Les défauts de référence sont généralement des défauts artificiels constitués, dans le cas de défauts de surface intérieure ou extérieure du tube, par une entaille radiale de longueur, d'épaisseur et de profondeur déterminées.

Cependant, les défauts naturels ont généralement tendance, en ce qui concerne les défauts de surface intérieure ou extérieure, à apparaître couchés en section droite du fait des opérations de mise en forme lors de la fabrication des tubes (laminage, étirage, etc). Les défauts qualifiés ainsi de "couchés" s'étendent au voisinage des surfaces intérieures ou extérieures des tubes sur une certaine largeur (en circonférence dans le cas de défauts couchés longitudinaux qui sont les plus fréquents) et une certaine profondeur. De tels défauts couchés, appelés "pailles couchées", sont généralement plus mal détectés que les défauts radiaux, et ce, d'autant plus qu'ils sont couchés.

En effet, pour les techniques les plus courantes de contrôle non destructif, ce type de défaut produit un signal de réponse dont l'intensité est semblable à celle d'un très petit défaut droit de surface. Il est donc difficile de discriminer un tel petit défaut droit, acceptable, d'une paille couchée qui doit donner lieu au rejet du tube.

La présente invention vient améliorer la situation.

Elle propose à cet effet un procédé automatique de contrôle des produits métalliques dans lequel :

a) on applique un faisceau d'ultrasons, impulsionnel et récurrent à un produit métallique soumis à un mouvement relatif par rapport au faisceau,
b) on capte les signaux d'échos renvoyés par le produit métallique, et
c) on sélectionne les signaux d'écho, dans au moins une partie déterminée de chaque récurrence, en vue d'identifier d'éventuels défauts dans le produit métallique.

Selon une caractéristique importante de l'invention, l'étape c) comprend :

c1) la construction d'une courbe temporelle des intensités d'échos dans des parties correspondantes d'une pluralité de récurrences successives, dite courbe échodynamique, l'intensité des échos sur la courbe échodynamique étant maintenue constante entre deux récurrences successives, les évolutions temporelles des maxima d'intensité des signaux d'échos reçus formant des courbes échodynamiques et
c2) l'analyse des variations de signaux échodynamiques représentés par cette courbe échodynamique, en vue de repérer automatiquement des signaux échodynamiques complexes résultant de la convolution d'au moins deux pics élémentaires significatifs de la présence de défauts couchés.

En effet, la Demanderesse s'est aperçue que, de façon surprenante, un tel signal échodynamique résultant de la convolution d'au moins deux pics élémentaires est significatif de la présence de défauts couchés.
L'étape c2) comprend la recherche de deux bosses au moins, successives dans les signaux de la courbe échodynamique.

Ainsi, selon l'un des avantages majeurs que procure la présente invention, le procédé ci-avant est mis en oeuvre sur une installation de contrôle par ultrasons existante en conservant l'électronique de commande des capteurs et celles de voies de détection classiques.

Néanmoins, la présente invention prévoit un traitement des signaux échodynamiques, approprié pour la détection des pailles couchées.

La présente invention vise donc aussi un dispositif permettant de mettre en oeuvre une partie au moins des étapes du procédé selon l'invention.

Elle propose à cet effet un dispositif pour une installation de contrôle automatique en ligne de produits métalliques, l'installation comprenant :

- au moins un capteur ultrasonore, ainsi que des moyens de déplacement du capteur et/ou d'un produit métallique à contrôler, relativement l'un par rapport à l'autre,
- au moins un circuit pour exciter périodiquement le capteur et pour recueillir les signaux de retour qu'il capte,
- au moins un filtre temporel pour isoler successivement, dans chaque période, au moins une portion de période, et
- un module de traitement capable d'extraire successivement une valeur d'intensité des signaux reçus, préférentiellement la valeur maximale en intensité, sur chaque portion de période.

Chaque portion de période est définie par un début de portion après un signal d'écho d'interface milieu liquide/produit métallique, ainsi que par un intervalle choisi de portion de période, comme on le verra plus loin. Le dispositif de détection de défauts couchés selon l'invention comprend alors :

- un bloc mémoire comprenant une zone d'acquisition pour stocker successivement chaque valeur avec une information sur la portion de période correspondante, telle qu'un indice temporel de période, en vue de former des signaux échodynamiques, les évolutions temporelles des maxima d'intensité des signaux d'échos reçus formant des courbes échodynamiques,
- un module de calcul capable de travailler sur les signaux échodynamiques pour évaluer un paramètre représentatif de la présence de deux bosses successives dans la répartition temporelle des signaux échodynamiques significatives de défauts couchés, le module de calcul étant adapté pour travailler sur des signaux échodynamiques complexes résultant de la convolution d'au moins deux pics élémentaires,
- un module de comparaison de ce paramètre avec des données de paramètres références stockées dans une zone réservée du bloc mémoire, et
- un module d'alerte propre à être déclenché en fonction de cette comparaison.

Selon une autre caractéristique importante du dispositif selon l'invention, le module de comparaison coopère avec le module d'alerte en vue d'avertir, en temps réel, un opérateur de la présence de défauts couchés dépassant un seuil de tolérance prédéterminé, dans un produit métallique en cours de contrôle. Avantageusement, le module de traitement de l'installation peut extraire successivement la valeur maximale de l'intensité des signaux reçus sur chaque portion de période. Le bloc mémoire du dispositif est alors agencé pour stocker successivement chaque valeur maximale d'intensité des signaux reçus en correspondance avec chaque portion de période.

Préférentiellement, un détecteur de seuil coopère avec le module de traitement pour ne transmettre à la mémoire d'acquisition que les valeurs d'intensité dépassant une valeur seuil choisie, ce qui permet ainsi de séparer un bruit de fond les signaux échodynamiques utiles pour la construction de la courbe échodynamique,

Ainsi, le dispositif de détection de pailles couchées selon l'invention peut avantageusement s'adapter, sans modifications excessivement compliquées, à un banc classique de contrôle non destructif de produits métalliques par ultrasons.

D'autres avantages et caractéristiques de l'invention apparaîtront à la lecture de la description détaillée ci-après et à l'examen des dessins annexés sur lesquels :

- la figure 1 représente schématiquement une installation de fabrication et de contrôle de produits métalliques,

- la figure 2 représente schématiquement un tube métallique sur lequel est appliqué un faisceau d'ultrasons,

- la figure 3 représente schématiquement l'allure temporelle des signaux d'échos captés en retour

- la figure 4 représente le détail de la construction d'une courbe échodynamique, montrant un signal échodynamique,

- les figures 5A et 5B représentent l'allure des signaux échodynamiques respectivement d'un défaut couché et d'une entaille droite sur un tube,

- les figures 6A, 6B, 6C et 6D représentent respectivement l'aspect d'un défaut couché, l'allure du signal échodynamique mesuré, l'allure du signal échodynamique obtenu par simulation et l'allure du signal échodynamique mesuré avec un angle d'incidence de faisceau différent,

- les figures 7A et 7B représentent respectivement l'aspect d'un autre défaut couché à la surface d'un tube et l'allure du signal échodynamique mesuré sur ce tube,

- la figure 8 est un graphique reliant la largeur angulaire d'un signal échodynamique (en ordonnées) qui est adéquate pour détecter des défauts couchés dans des tubes de diamètres variables (valeurs en abscisses),

- la figure 9 représente l'allure de la fréquence de récurrence minimale des impulsions (en ordonnées) à appliquer en fonction de la vitesse tangentielle de rotation relative du tube par rapport au faisceau (en abscisses), pour obtenir une définition suffisante des signaux échodynamiques, et

- la figure 10 représente schématiquement un circuit d'un dispositif selon l'invention, dans une forme de réalisation.

Les dessins annexés comportent des éléments de caractère certain. En conséquence, ils pourront non seulement servir à mieux faire comprendre l'invention, mais aussi contribuer à la définition de celle-ci, le cas échéant.

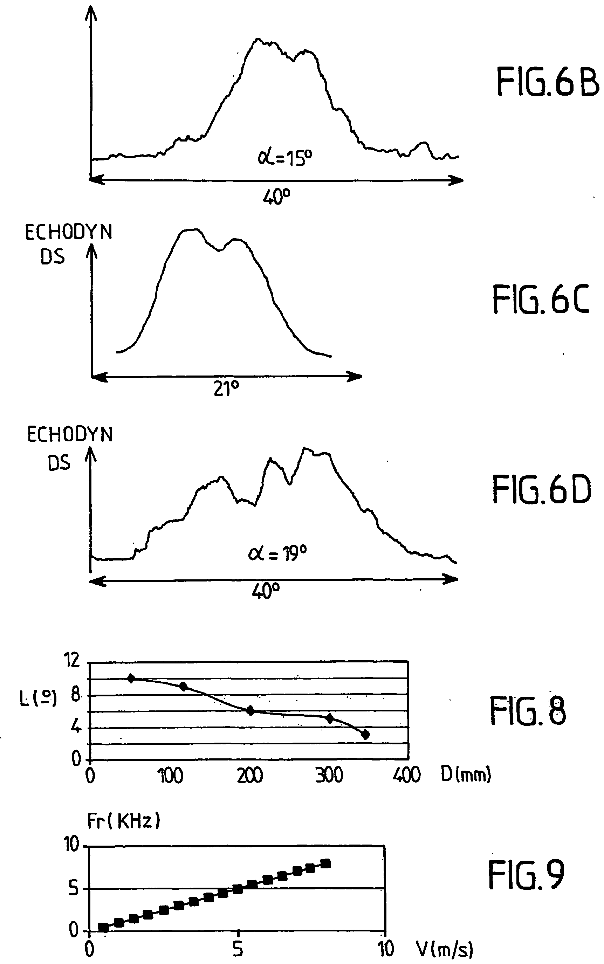

Les valeurs numériques indiquées sur les courbes des graphiques, notamment sur les figures 8 et 9, sont de caractère certain. Elles peuvent contribuer, le cas échéant, à définir des conditions opératoires d'étapes du procédé selon l'invention.

La description détaillée ci-après est donnée essentiellement dans le cadre du contrôle automatique non destructif de tubes métalliques en sortie de fabrication, à titre non limitatif.

Ce contrôle, par ultrasons, distingue de façon générale deux types principaux de défauts dans un tube : les défauts de surface et les défauts dans la masse tels que les inclusions ou les dédoublures.

Les défauts de surface, internes ou externes, comprennent les défauts longitudinaux et les défauts circonférentiels (ou transverses) et sont considérés comme les plus dangereux pour l'usage des tubes.

Les défauts couchés ou "pailles couchées" sont des particularités très courantes des défauts de surface sur tubes et proviennent des opérations de mise en forme des tubes, telles que par exemple le laminage et/ou l'étirage, susceptibles de coucher des défauts préexistants sur les produits de départ, voire de générer des pailles couchées. En particulier, les pailles couchées longitudinales sont les plus fréquentes. Les pailles couchées s'étendent en oblique, dans une section droite des tubes, au voisinage des surfaces intérieures ou extérieures des tubes, sur une certaine largeur et dans une certaine profondeur.

Typiquement, elles possèdent des défauts de grande étendue et sont fortement inclinés par rapport à la normale (en général plus de 45°).

Or, pour le contrôle des tubes, on cherche à détecter les défauts de surface dès qu'ils s'étendent sur une longueur d'au moins 5 mm environ, pour une profondeur d'au moins 5% de l'épaisseur du tube, ces défauts étant plus difficiles à détecter lorsqu'ils sont inclinés.

En effet, le pouvoir réflecteur global d'un défaut est classiquement dû à un effet dit "de coin" qui est important dans le cas de défauts droits, c'est-à-dire non couchés, mais qui est très faible lorsque les défauts sont couchés.

Un seuil de contrôle qualifié de "normal" choisi après le passage de tube comportant des défauts étalons droits entraîne un risque notable d'envoyer en clientèle des tubes défectueux.

D'un autre côté, le choix d'un seuil de contrôle renforcé entraîne la détection d'imperfections, qui cependant ne sont pas rédhibitoires. Un tel choix entraîne un surcoût important pour le fournisseur. Il est donc recherché actuellement un contrôle des défauts permettant de dominer à la fois le risque "client" et le risque "fournisseurs".

La présente invention est basée sur l'idée venue à la demanderesse que les signaux ultrasonores renvoyés par un défaut couché pouvaient avoir pour origine prépondérante d'autres effets que l'effet de coin, tels que des effets de diffraction pour les extrémités du défaut. En revanche, l'effet de diffraction est normalement masqué par l'effet de coin dans le cas d'un défaut droit. Un même défaut couché serait alors susceptible de générer plusieurs échos de diffraction, au moins un pour chaque extrémité du défaut couché.

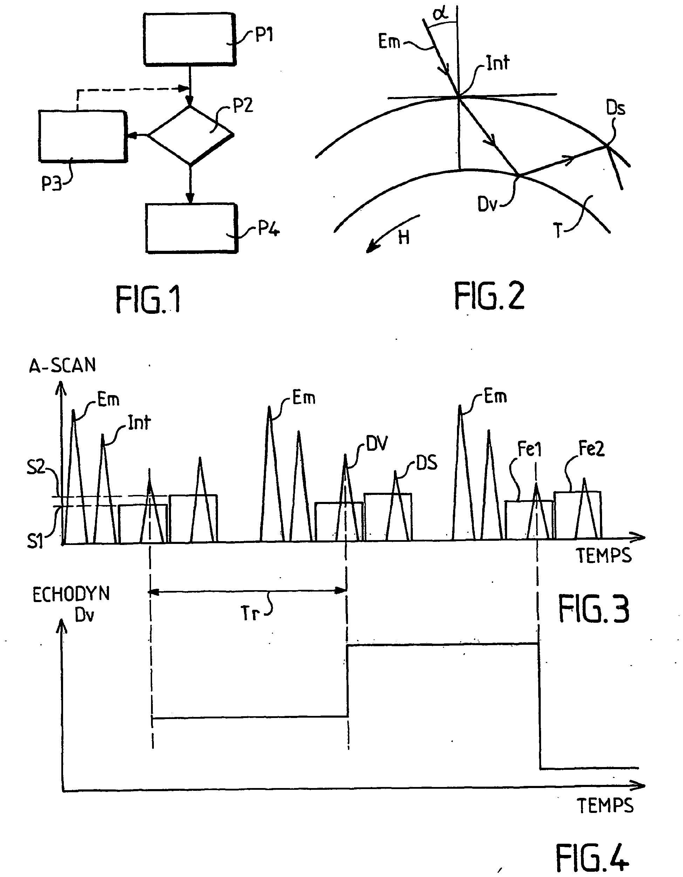

Le procédé selon l'invention prévoit, directement en sortie d'un poste de fabrication de tubes P1 (figure 1), un contrôle non destructif par ultrasons des tubes. Au poste de contrôle P2, on teste la qualité des tubes en vérifiant l'absence de défauts de surface, ainsi que leur épaisseur en vérifiant aussi, au passage, l'absence de défauts dans la masse. Il peut être alors prévu deux types de mesures :

- l'une à incidence de faisceaux d'ultrasons normale pour en déduire l'épaisseur, et
- l'autre, à une incidence de faisceaux différente, comme on le verra plus loin, pour détecter les défauts de surface.

Les tubes douteux, susceptibles donc de présenter des défauts, sont rangés à part, au poste P3, tandis que les autres tubes ayant remplis les critères de qualité choisis peuvent être livrés à la clientèle au poste P4. Les tubes douteux au poste P3 peuvent éventuellement être repassés au contrôle du poste P2, pour une confirmation de la présence de défauts ou non.

En se référant à la figure 2, les tubes T sont soumis au poste P2 à un mouvement hélicoïdal H relatif par rapport à des capteurs ultrasonores montés généralement en barrette à la périphérie d'une chambre à eau. Les tubes T se déplacent à une vitesse d'environ 1 mètre/seconde en translation à travers la chambre à eau tandis que les capteurs tournent à une vitesse de rotation de quelques dizaines de tours/seconde.

On peut aussi de manière connue faire avancer le tube hélicoïdalement dans des capteurs fixes mais la productivité d'un tel mode de contrôle est plus faible.

Pour le contrôle des défauts de surface, le faisceau d'ultrasons est émis par impulsions Em, avec une incidence $\alpha$ choisie par rapport à la normale de la surface extérieure du tube.

Les impulsions ultrasonores se propagent dans l'eau de la chambre à eau sous forme d'ondes longitudinales jusqu'au dioptre formé par la surface extérieure des tubes. L'angle $\alpha$ est, de manière connue, tel que seule une composante transversale d'onde ultrasonore est réfractée à l'interface eau/métal des tubes.

Dans le cas de tubes en acier, l'angle $\alpha$ est compris entre 15° et 27°.

Les impulsions ultrasonores se propagent donc dans l'épaisseur du tube jusqu'à la surface intérieure du tube et effectuent ensuite une pluralité d'allers-retours entre la surface intérieure et la surface extérieure du tube. En absence de défauts, le faisceau est réfléchi plusieurs fois dans le tube métallique et le coefficient d'absorption du métal contribue à amortir l'onde ultrasonore. Cependant, lorsque le faisceau rencontre des défauts de surface intérieurs ou extérieurs, les défauts renvoient une partie de l'énergie d'une telle manière qu'une partie au moins peut franchir le dioptre tube/eau et être récupérée par les capteurs ultrasonores sous forme de signaux d'écho.

La figure 3 représente l'allure temporelle d'un signal dit "A-SCAN". Un tel signal comporte les impulsions Em du faisceau émis et les impulsions des échos captés en retour. Ainsi, pour une incidence $\alpha$ non nulle, le signal A-SCAN présente une succession d'impulsions Em, suivies d'impulsions Int d'échos d'interface entre l'eau et la surface extérieure du tube, puis, en présence de défauts sur la surface interne du tube Dv et sur sa surface externe Ds, des signaux d'échos relatifs à des défauts sur la surface intérieure Dv et d'échos relatifs à des défauts sur la surface extérieure Ds. En pratique, l'écho d'interface Int est prépondérant et masque un écho Ds dû à un défaut sur la surface extérieure du tube. C'est pourquoi l'écho Ds est capté généralement sur le faisceau réfléchi par la surface intérieure du tube.

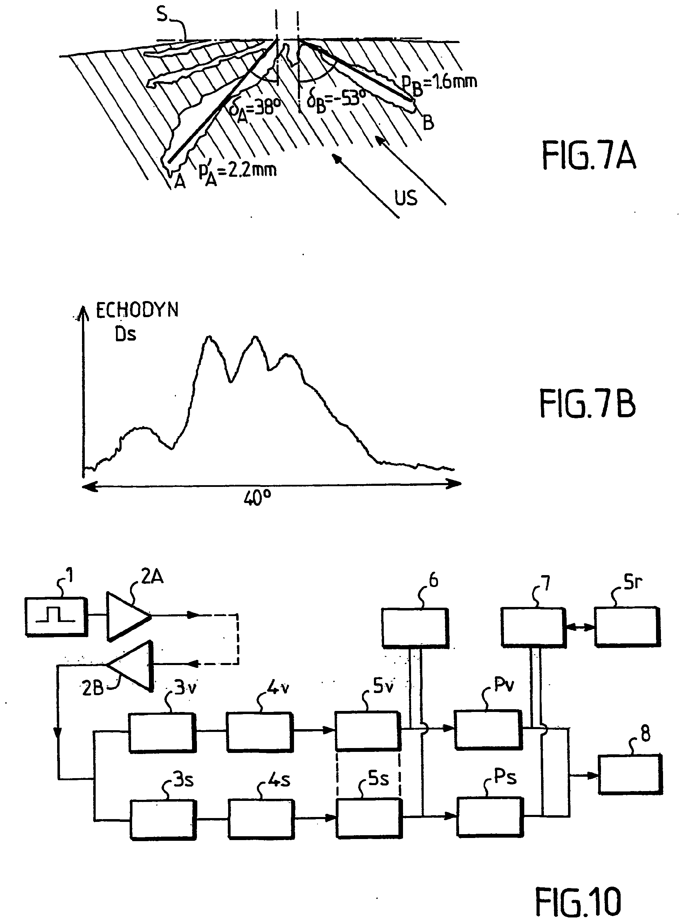

En se référant à la figure 10, le dispositif de contrôle comprend des capteurs qui se présentent chacun sous la forme d'un élément transducteur 2A pour émettre des ondes ultrasonores. Ils sont commandés par un générateur d'impulsions 1 à une fréquence de récurrence choisie. Les éléments transducteurs captent les échos renvoyés et agissent ainsi en tant que récepteurs 2B. Le dispositif comprend en outre un circuit de réception relié aux capteurs et qui se sépare en deux voies d'analyse, l'une pour les défauts sur la surface interne Dv et l'autre, pour les défauts sur la surface externe Ds. Chaque voie comporte un filtre temporel (par exemple un échantillonneur bloqueur 3V, 3S) relié à l'élément transducteur pour isoler des fenêtres temporelles successives, susceptibles de présenter un écho relatif à un défaut couché Dv, Ds.

Le générateur d'impulsions 1 commande périodiquement les éléments transducteurs, de sorte qu'il émettent un faisceau impulsionnel Em à chaque période Tr (figure 3). Les filtres temporels 3V, 3S isolent alors dans la période Tr des fenêtres respectives Fe1 et Fe2 dans lesquelles les échos Dv et Ds des défauts sont susceptibles d'être présents. Bien entendu, les positions et les largeurs respectives des fenêtres Fe1 et Fe2 dépendent de la période Tr, du diamètre extérieur et de l'épaisseur du tube métallique et de la vitesse de propagation des ultrasons dans le métal.

Dans chacune des voies, les filtres temporels sont suivis de modules de traitement 4v,4s comprenant chacun un détecteur de seuil. Les modules de traitement 4v,4s repèrent, dans l'exemple, le maximum en intensité des signaux d'échos reçus Dv,Ds. Ils sont reliés à des mémoires d'acquisition 5v et 5s pour enregistrer les maxima d'intensité de ces échos, si ces maxima dépassent respectivement des seuils choisis S1,S2. En revanche, si ces valeurs maximales sont inférieures aux seuils S1,S2, une valeur nulle leur est attribuée.

Typiquement, si le défaut est radial, l'écho détecté est principalement issu de la réflexion sur ce défaut par effet de coin, le coefficient de réflexion du à l'effet de coin étant élevé. En revanche, lorsque le défaut est une paille couchée, l'écho détecté est davantage dû à la diffraction du faisceau sur ce défaut et son intensité est beaucoup plus faible. Pour détecter des pailles couchées, les seuils S1,S2 seront donc choisis inférieurs aux seuils fixés pour la détection de défauts radiaux.

Les mémoires 5v,5s stockent ces valeurs maximales d'intensité en association avec un indice de période à laquelle les échos sont détectés. Par exemple, un compteur de période (non représenté) coopère avec ces mémoires, en vue de mémoriser ainsi des couples comprenant une valeur maximale d'intensité et un indice temporel de période. Ce comptage peut également être réalisé par logiciel.

Les évolutions temporelles de ces maxima forment les courbes échodynamiques des échos Dv,Ds.

La figure 4 représente un exemple d'une courbe échodynamique mesurée sur la surface intérieure du tube T. En présence de défauts sur cette surface intérieure, le maximum de l'intensité d'un écho Dv est détecté s'il dépasse un seuil S1. Les variations de ces maxima sont reportées d'une fenêtre Fe1 à la fenêtre Fe1 de la période Tr suivante. L'intensité des signaux échodynamiques est maintenue constante entre deux périodes successives sur la courbe échodynamique. Ainsi, dans la courbe échodynamique de l'écho Dv, l'écart en abscisse entre deux points successifs correspond à une période de récurrence Tr. L'écart en ordonnée entre deux points successifs est représentatif d'un écart entre deux maxima d'intensité relevés entre deux mesures successives de l'écho Dv.

La courbe échodynamique est donc la représentation du maximum de l'amplitude dans une fenêtre de contrôle au cours du temps : l'amplitude maximale de l'écho dans une fenêtre est relevée pour chaque tir Em et sa valeur est gardée jusqu'à ce qu'un nouveau tir soit effectué, dans la récurrence suivante. La courbe échodynamique, d'allure sensiblement en créneaux, représente alors l'enveloppe des différents signaux d'écho dans le temps et comprend des signaux échodynamiques, chaque signal échodynamique étant relatif à un défaut.

En se référant à la figure 10, le dispositif selon l'invention comporte en outre un module de calcul 6 capable d'effectuer des opérations sur les données stockées dans les mémoires 5v,5s. Par exemple, le module de calcul peut lisser dans un premier temps les courbes échodynamiques mesurées.

En particulier, le module de calcul est agencé pour repérer au moins deux bosses dans une courbe échodynamique de manière à identifier sur un signal résultant de la diffraction du faisceau ultrasonore par les extrémités du défaut.

L'existence d'au moins deux segments temporels dans la courbe échodynamique, en lesquels sa dérivée par rapport au temps est nulle, est donc un premier critère de présence d'une paille couchée. Du fait que ces deux bosses peuvent se chevaucher, il peut être prévu de déconvoluer ces signaux échodynamiques pour détecter plus facilement les pics élémentaires. En outre, une mesure de l'aire des signaux échodynamiques, ou encore une mesure de leur largeur à une hauteur en intensité échodynamique donnée, peuvent être prévues. En effet, le signal échodynamique d'une paille couchée est typiquement plus étalé que celui d'un défaut droit.

Le module de calcul 6 fournit, en coopération avec les mémoires d'acquisition 5v,5s, au moins un paramètre Pv,Ps pour chaque voie d'acquisition (défaut sur la surface inter-ne/défaut sur la surface externe). Un tel paramètre Pv (ou Ps) est quantitativement représentatif de la présence de défauts couchés sur la face interne (ou externe) du tube. Par exemple, ce paramètre peut se présenter sous la forme d'un jeu de données relatives :

- à la position des pics élémentaires et à leur intensité,
- et/ou à la largeur à une hauteur prédéterminée de la courbe échodynamique,
- et/ou à l'aire de la courbe échodynamique.

Le dispositif selon l'invention comprend un module de comparaison 7, ainsi qu'une zone mémoire réservée 5r, dans laquelle sont stockées des valeurs de paramètres références, notamment pour des défauts couchés étalons sur la surface interne Dv et pour des défauts couchés étalons sur la surface externe Ds. Ces valeurs références définissent préférentiellement un seuil de tolérance selon les critères de qualité précités des tubes. Typiquement, si l'intensité des pics élémentaires détectés, ou l'aire de la courbe échodynamique mesurée, ou encore sa largeur à une intensité prédéterminée, sont supérieures aux valeurs références stockées dans la mémoire réservée 5r, le tube ne devra pas être livré à la clientèle.

Le dispositif selon l'invention comprend un module d'alerte 8 qui coopère avec le module de comparaison 7 qui émet typiquement un signal d'alerte, par exemple un signal visuel sur un moniteur ou sur un voyant lumineux, ou encore un signal sonore sur un haut-parleur, en fonction du résultat de la comparaison. Typiquement, si le paramètre Pv,Ps précité (intensité des pics élémentaires, largeur ou aire de la courbe échodynamique) dépasse une valeur seuil, le module d'alerte se déclenche pour avertir un opérateur de la non-conformité du tube en cours d'analyse. En effet, ce tube sera en dehors des limites de tolérance fixées pour la livraison à la clientèle.

Bien entendu, le test sur la présence de pailles couchées en nombre et/ou en quantité intolérables, du type décrit ci-avant, peut s'accompagner, le cas échéant, d'un test sur la présence de défauts droits (de type "entailles radiales"), ainsi que d'un test en palpage droit sur l'épaisseur et la présence de défauts dans la masse du tube (dédoublures, etc), ces tests étant mis en oeuvre de façon conventionnelle.

Avantageusement, les dispositifs pour la détection de pailles couchées, du type décrit ci-avant, ne nécessitent pas de modifications substantielles par rapport aux dispositifs préexistants pour la détection des défauts radiaux et autres. Les cas échéant, il suffira d'abaisser les seuils de détection S1,S2, des voies de contrôle des défauts couchés par rapport à ceux de détection de défauts droits, comme on le verra plus loin.

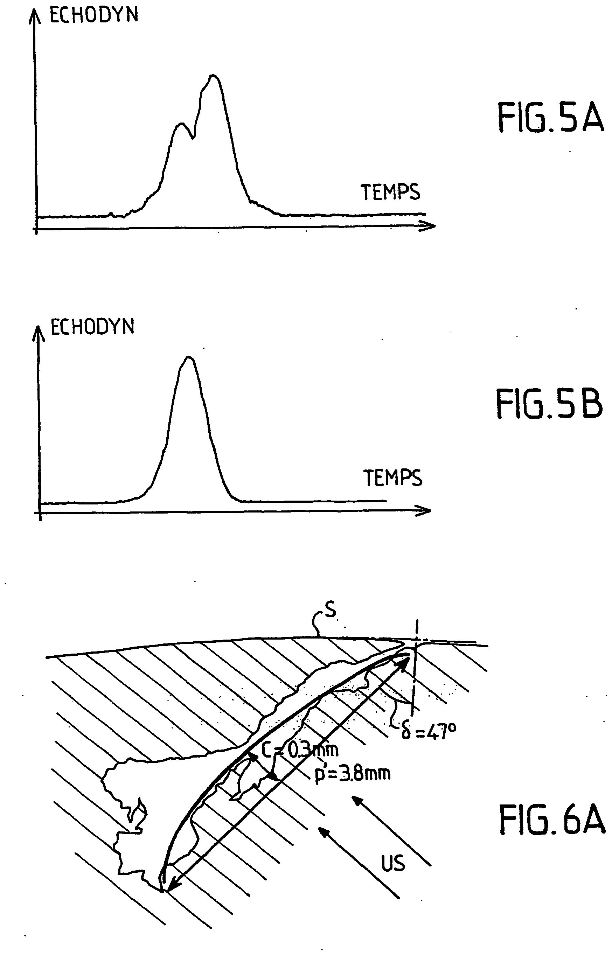

On se réfère maintenant à la figure 5A représentant le signal échodynamique d'une paille couchée. On constate sans ambiguïté que ce signal présente deux bosses suffisamment séparées pour les distinguer. En comparaison, en se référant à la figure 5B, le signal échodynamique d'une entaille droite sur la surface du tube ne présente qu'un unique pic élémentaire.

Cependant, dans la plupart des cas, les pics élémentaires, dans un signal échodynamique d'une paille couchée, se chevauchent, au moins partiellement, comme on le verra plus loin (figure 6B).

On se réfère d'ailleurs à la figure 6A sur laquelle une paille couchée présente, dans une coupe longitudinale droite d'un tube étiré à froid de diamètre extérieur de 62,1 mm et d'épaisseur de 6 mm, un évidement dans la masse qui s'étend, en oblique, de la surface extérieure du tube (dans l'exemple décrit) vers l'axe du tube. Dans l'exemple représenté, ce défaut couché est sensiblement en arc de cercle, avec une corde formant un angle d'environ 47° par rapport à la normale à la surface extérieure S du tube passant par le point où le défaut débouche. La largeur de la paille couchée est voisine de 3,8 mm et son écart maximal par rapport à la corde est de 0,3 mm. Elle affecte le tube sur une profondeur de 2,6 mm soit 43 % de son épaisseur.

La figure 6B représente la courbe échodynamique mesurée sur la paille couchée de la figure 6A, dans les fenêtres Fe2 des périodes de récurrence Tr. Cette courbe échodynamique a été obtenue avec une incidence α de 15° et un seuil de détection de -10 décibels par rapport à l'écho de retour d'une entaille étalon de 0,3 mm (5 % de l'épaisseur). La direction du faisceau d'ultrasons réfléchi par la surface intérieure et incident sur le défaut est indiquée par les flèches US sur la figure 6A. La courbe échodynamique de la figure 6B fait clairement apparaître deux bosses caractéristiques, qui se chevauchent sensiblement.

Sur la figure 6C est représentée une modélisation de la courbe échodynamique de la figure 6B mesurée expérimentalement. Elle reproduit fidèlement les deux bosses précitées. Cette modélisation a été obtenue en considérant un champ acoustique de type fonction de Bessel lissé. La largeur de la tache focale du faisceau d'ultrasons est estimée à partir d'une approximation classique en optique géométrique. Le défaut naturel a été approché ici par un flanc elliptique, dont les paramètres (profondeur, corde, etc) ont été déterminés au préalable. Pour des défauts sensiblement droits (cas de la figure 7A), ils seront approchés par une droite.

En se référant à la figure 6D, la courbe échodynamique mesurée sur le même défaut de la figure 6A, mais pour une incidence α de 19°, présente une allure sensiblement différente, avec globalement trois bosses prépondérantes. Ainsi, même en changeant l'incidence de quelques degrés, on pourra toujours détecter la présence de pailles couchées, dès lors que l'on observe au moins deux bosses sur la courbe échodynamique.

La Demanderesse a observé qu'une incidence α classique, voisine de 16°, permettait avantageusement de recueillir un signal d'échos de défauts couchés, suffisant pour détecter de façon satisfaisante au moins deux bosses sur les signaux de la courbe échodynamique.

En fait, il apparaît que le meilleur compromis entre l'allure de la courbe de réponse acoustique à deux bosses et un bon rapport signal/bruit est obtenu pour un angle d'incidence proche de 16°. Les modélisations de ces courbes échodynamiques confirment de façon générale ces résultats. De plus, les incidences habituelles pour détecter les défauts radiaux sont aussi voisines de 16°, ce qui permet de passer de la détection des défauts radiaux à la détection des défauts couchés sans modifications majeures du protocole de contrôle des tubes.

On se réfère maintenant à la figure 7A qui représente une pluralité de défauts couchés regroupés localement au voisinage de la surface extérieure S d'un tube de même dimension que celui de la figure 6A. On repère en particulier deux défauts couchés prépondérants. Un premier défaut A est incliné d'environ 38° par rapport à la normale à la surface. Sa largeur de flanc est voisine de 2,2 mm. Le défaut B est incliné d'environ 53° par rapport à la normale à la surface, dans la direction opposée. Sa largeur de flanc est de 1,6 mm. La direction du faisceau d'ultrasons réfléchi par la surface intérieure du tube est indiquée par les flèches US.

Sur la figure 7B, il apparaît que la courbe échodynamique obtenue comporte plus de deux bosses. La Demanderesse a observé que de nombreux maxima peuvent être repérés sur la courbe échodynamique. Ces nombreux maxima proviennent de la convolution de signaux issus de plusieurs défauts de formes différentes et de longueurs de flancs généralement supérieures à 1 mm.

La Demanderesse a cherché en outre à déterminer un pas d'échantillonnage minimal et, par conséquent, une fréquence de récurrence minimale pour détecter la convolution des pics et notamment la forme en double bosse du signal échodynamique d'un défaut couché. Les essais effectués sur différentes courbes montrent qu'au moins dix points par courbe échodynamique sont nécessaires pour détecter la forme à au moins deux bosses.

Ce nombre minimal de points permet de déterminer le pas angulaire entre récurrences si l'on connaît la largeur angulaire typique des pailles couchées.

La fréquence de récurrence est donnée par la relation :

$$\mathtt{Fr = 360.v/(\pi\ x\ D\ x\ p)}$$

où p est le pas angulaire d'échantillonnage, D le diamètre extérieur du tube et v la vitesse tangentielle des capteurs par rapport aux tubes.

Le pas angulaire P minimal (en degré par récurrence) est alors lié par la relation Pmin ≥ L/10 où L est la largeur angulaire typique des défauts couchés.

La figure 8 montre que la largeur angulaire L varie fortement en fonction du diamètre du tube. En se référant à la figure 9, la largeur angulaire de la courbe échodynamique (indiquée en °) diminue lorsque le diamètre D du tube augmente. En effet, la courbure de surface diminue et donc la divergence du faisceau suit cette variation. C'est ainsi que le pas d'échantillonnage minimal devrait diminuer quand le diamètre D du tube diminue.

Les figures 6B (expérience) et 6C (modélisation) confirment de telles valeurs de L, la partie significative des courbes s'étendant au maximum sur une vingtaine de degrés.

Compte tenu du mouvement relatif hélicoïdal du tube par rapport aux capteurs, pour une avance longitudinale de 40 mm par tour, le faisceau ultrasonore "verra" sur 20° (comptés angulairement sur la circonférence du tube) des sections droites différentes du défaut, distantes au plus de 25 mm. Les caractéristiques géométriques du défaut peuvent être considérées comme constantes sur une telle longueur.

En se référant à la figure 9, la fréquence de récurrence minimale Fr varie linéairement en fonction de la vitesse tangentielle v du capteur. Ces variations sont données pour des tubes de diamètre D de 116 mm et de 300 mm. La Demanderesse a alors constaté que la dépendance de la fréquence de récurrence minimale Fr, en fonction de la vitesse tangentielle v, ne varie sensiblement pas en fonction du diamètre D du tube. Typiquement, pour une vitesse de rotation du capteur de l'ordre de quelques tours par seconde et pour un tube de 116 mm de diamètre, la fréquence de récurrence minimale Fr est voisine de 10 kHz.

Avantageusement, les fréquences de récurrence nécessaires pour conserver la forme de la courbe échodynamique à deux bosses sont relativement faibles et, de façon générale, compatibles avec les fréquences de récurrence usuelles tenant compte des temps de parcours des ondes ultrasonores dans les tubes.

Pour des tubes dont le diamètre est voisin des valeurs indiquées précédemment, cette fréquence de récurrence correspond à environ 0,5 à 1° entre chaque tir Em, dans les conditions de contrôle usuelles. En contrôle automatique, le pas angulaire de récurrence des émissions sur le tube est donc choisi inférieur ou égal à un angle voisin de 1°, de préférence inférieur à 0,5°.

Le contrôle par ultrasons, au sens de la présente invention, permet donc de détecter des défauts couchés par analyse de la courbe échodynamique mesurée sur un tube, et ce, sans modification majeure des techniques de mesure et des installations de contrôle.

En variante ou en complément, un paramètre typiquement susceptible d'être utilisé aussi est le rapport entre son aire et sa hauteur.

On peut mettre en oeuvre le procédé et le dispositif selon l'invention sur une grande diversité d'installations de contrôle par ultrasons. Les capteurs peuvent alors se présenter sous la forme d'une pluralité d'éléments transducteurs montés en barrette, avec une électronique de commande qui excite ces éléments transducteurs selon une loi de phase choisie. Cette disposition permet avantageusement de ne pas avoir à mettre en rotation physiquement les capteurs par rapport aux tubes. Avec une telle électronique de commande, il est par exemple possible d'obtenir des vitesses de rotation virtuelles extrêmement élevées en fonction des progrès des électroniques de commande et de gestion des signaux.

Les valeurs des angles d'incidence indiquées ci-avant sont données à titre d'exemple. Néanmoins, une valeur d'incidence voisine de 16° est préférentiellement utilisée pour les tests automatiques en ligne, des tubes en sortie de fabrication.

Bien que la description détaillée ci-dessus se réfère essentiellement au contrôle non destructif de tubes métalliques, il est clair que l'invention est susceptible de nombreuses autres applications, notamment le contrôle de plaques métalliques et, plus généralement, le contrôle de tout produit métallique.

## Revendications

1.  Procédé automatique de contrôle de produits métalliques dans lequel :

    a) on applique un faisceau d"ultrasons (Em), impulsionnel et récurrent à un produit métallique (T) soumis à un mouvement relatif (H) par rapport au faisceau,
    b) on capte les signaux d'échos (Dv, Ds) renvoyés par le produit métallique, et
    c) on sélectionne les signaux d'écho, dans au moins une partie déterminée (Fe1,Fe2) de chaque récurrence (Tr), en vue d'identifier d'éventuels défauts dans le produit métallique,

    **caractérisé en ce que** l'étape c) comprend :

    c1) la construction d'une courbe temporelle (ECHODYN) des intensités d'échos dans des parties correspondantes d'une pluralité de récurrences successives, dite courbe échodynamique, l'intensité des échos sur la courbe échodynamique étant maintenue constante entre deux récurrences successives, les évolutions temporelles des maxima d'intensité des signaux d'échos reçus (Ds, Dv) formant des courbes échodynamiques, et
    c2) l'analyse des variations de signaux échodynamiques représentés par cette courbe échodynamique, en vue de repérer automatiquement des signaux échodynamiques complexes résultant de la convolution d'au moins deux pics élémentaires, significatifs de la présence de défauts couchés comprenant la recherche de deux bosses au moins, successives dans les signaux de la courbe échodynamique (ECHODYN).

2.  Procédé selon la revendication 1, **caractérisé en ce que** l'étape c2) comprend la mesure d'au moins un paramètre des signaux échodynamiques, choisi parmi faire de la courbe échodynamique, sa largeur à mi-hauteur, sa hauteur, sa largeur à la base.

3.  Procédé selon l'une des revendications précédentes, **caractérisé en ce que** l'étape c) comprend une déconvolution des signaux échodynamiques.

4.  Procédé selon l'une des revendications précédentes, **caractérisé en ce que**, à l'étape c), on ne traite que les échos dépassant un seuil choisi (S 1,S2).

**5.** Procédé selon l'une des revendications précédentes, **caractérisé en ce que** lesdites récurrences sont périodiques et de fréquence choisie (Fr), pour que le signal échodynamique d'un défaut couché soit obtenu pour au moins dix récurrences successives.

**6.** Procédé selon la revendication 5, dans lequel le produit métallique à contrôler est un tube (T), déplacé relativement au faisceau d'ultrasons selon un mouvement hélicoïdal (H), **caractérisé en ce que** le pas circonférentiel de récurrence des émissions sur le tube est inférieur ou égal à un angle voisin de 1°, de préférence inférieur à 0,5°.

**7.** Dispositif pour une installation de contrôle automatique en ligne de produits métalliques, l'installation comprenant :

- au moins un capteur ultrasonore (2A, 2B), ainsi que des moyens de déplacement (H) du capteur et/ou d'un produit métallique à contrôler, relativement l'un par rapport à l'autre,
- au moins un circuit (1) pour exciter périodiquement le capteur et pour recueillir les signaux de retour qu'il capte,
- au moins un filtre temporel (3v, 3s) pour isoler successivement, dans chaque période, au moins une portion de période,
chaque portion de période comprenant un début de portion défini par rapport à un signal d'écho d'interface milieu liquide/produit métallique (Int), ainsi qu'un intervalle choisi de portion de période (Fe 1, Fe2), et
- un module de traitement (4v, 4s) capable d'extraire successivement une valeur d'intensité des signaux reçus pour chaque portion de période,

**caractérisé en ce que** le dispositif comporte :

- un bloc mémoire comprenant une zone d'acquisition (5v, 5s) pour stocker successivement chaque valeur avec une information sur la portion de période correspondante, en vue de former des signaux échodynamiques (ECHODYN), les évolutions temporelles des maxima d'intensité des signaux d'échos reçus (Ds, Dv) formant des courbes échodynamiques,
- un module de calcul (6) capable de travailler sur lesdits signaux échodynamiques pour évaluer un paramètre (Pv, Ps) représentatif de la présence de deux bosses successives dans la répartition temporelle des signaux échodynamiques significatives de défauts couchés, le module de calcul étant adapté pour travailler sur des signaux échodynamiques complexes résultant de la convolution d'au moins deux pics élémentaires,
- un module de comparaison (7) de ce paramètre avec des données de paramètres références stockées dans une zone réservée (5r) du bloc mémoire, et
- un module d'alerte (8) propre à être déclenché en fonction de ladite comparaison,
et **en ce que** le module de comparaison (7) est agencé pour coopérer avec le module d'alerte (8) en vue d'avertir, en temps réel, un opérateur de la présence de défauts couchés dépassant un seuil de tolérance prédéterminé, dans un produit métallique (T) en cours de contrôle.

**8.** Dispositif selon la revendication 7, **caractérisé en ce que**, le module de traitement (4v, 4s) étant agencé pour extraire successivement la valeur maximale de l'intensité des signaux reçus (Dv, Ds) sur chaque portion de période (Fe1, Fe2), le bloc mémoire est agencé pour stocker successivement chaque valeur maximale d'intensité des signaux reçus (Dv, Ds), en correspondance avec chaque portion de période (Fe1, Fe2).

**9.** Dispositif selon l'une des revendications 7 et 8, **caractérisé en ce qu'**il comporte un détecteur de seuil apte à coopérer avec le module de traitement (4v, 4s) pour ne transmettre à la mémoire d'acquisition que les valeurs d'intensité dépassant une valeur seuil choisie (S1, S2).

**10.** Dispositif selon l'une des revendications 7 à 9, **caractérisé en ce que** le module de calcul (6) est agencé pour effectuer au moins une opération sur la répartition temporelle des signaux échodynamiques (ECHODYN), choisie parmi les opérations suivantes :

i) détermination de l'existence d'au moins deux dérivées nulles sur des signaux échodynamiques non nuls ;
ii) déconvolution des signaux échodynamiques ;
iii) évaluation de la largeur de la répartition temporelle à une intensité échodynamique choisie ;
iv) évaluation d'une intégrale sur la répartition temporelle.

**Patentansprüche**

**1.** Automatisches Verfahren zur Kontrolle von Metallprodukten bei dem:

a) ein Ultraschallstrahl (Em) in wiederkehrenden Impulsen auf ein Metallprodukt (T) angewandt wird, das sich auf den Strahl bezogen in Relativbewegung (H) befindet,

b) die Echosignale (Dv, Ds) gemessen werden, die das Metallprodukt zurückwirft, und

c) die Echosignale ausgewählt werden in mindestens einem bestimmten Bereich (Fe1, Fe2) jedes Impulses (Tr), um eventuelle Fehler des Metallproduktes festzustellen, **dadurch gekennzeichnet, dass** Schritt c) folgendes beinhaltet:

c1) die Erstellung eines Zeitverlaufs (ECHODYN) der Echosignalstärken in entsprechenden Bereichen mehrerer aufeinanderfolgender Impulse, sog. echodynamischer Verlauf, wobei die Echosignalstärke im echodynamischen Verlauf zwischen zwei aufeinanderfolgenden Impulsen konstant gehalten wird, wobei die zeitlichen Verschiebungen der Maximalwerte der empfangenen Echosignale (Ds, Dv) echodynamische Verläufe bilden, und

c2) die Analyse der Abweichungen der im echodynamischen Verlauf dargestellten echodynamischen Signale, um automatisch komplexe echodynamische Signale zu identifizieren, die aus der Konvolution von mindestens zwei elementaren Spitzen entstehen, die auf verdeckte Fehler hinweisen, wobei dies die Suche nach mindestens zwei aufeinanderfolgenden Höckern in den Signalen des echodynamischen Verlaufes (ECHODYN) einschließt.

**2.** Verfahren nach Anspruch 1, **dadurch gekennzeichnet, dass** Schritt c2) die Messung mindestens eines Parameters der echodynamischen Signale beinhaltet, der ausgewählt wurde aus: der Fläche des echodynamischen Verlaufes, ihrer Breite auf halber Höhe, ihrer Höhe, ihrer Breite an der Grundlinie.

**3.** Verfahren gemäß einem der vorhergehenden Ansprüche, **dadurch gekennzeichnet, dass** Schritt c) eine Dekonvolution echodynamischer Signale beinhaltet.

**4.** Verfahren gemäß einem der vorhergehenden Ansprüche, **dadurch gekennzeichnet, dass** in Schritt c) nur Echos ab einem bestimmten Schwellenwert (S1, S2) behandelt werden.

**5.** Verfahren gemäß einem der vorhergehenden Ansprüche, **dadurch gekennzeichnet, dass** besagte Impulse periodisch und von einer bestimmten Frequenz (Fr) sind, damit das echodynamische Signal eines verdeckten Fehlers bei mindestens zehn aufeinanderfolgenden Impulsen erhalten wird.

**6.** Verfahren nach Anspruch 5, bei dem das zu kontrollierende Metallprodukt ein Rohr (T) ist, das sich im Verhältnis zum Ultraschallstrahl in einer schraubenförmigen Bewegung (H) befindet, **dadurch gekennzeichnet, dass** der Winkel der Impulse der Strahlen auf das Rohr kleiner als oder gleich einem benachbarten Winkel von 1° ist, vorzugsweise kleiner als 0,5°.

**7.** Vorrichtung für die Installierung einer automatischen Kontrolle in der Linie für Metallprodukte, die Installation beinhaltet:

- mindestens einen Ultraschallsensor (2A, 2B), sowie ein Fortbewegungsmittel (H) des Sensors und/oder eines zu kontrollierenden Metallproduktes, relativ zueinander,

- mindestens einen Schaltkreis (1), um in periodischen Abständen den Sensor anzusteuern und die Rücksignale aufzuzeichnen, die er empfängt,

- mindestens einen Zeitfilter (3v, 3s), um sukzessiv in jeder Periode mindestens einen Periodenabschnitt zu isolieren, wobei jeder Periodenabschnitt einen Abschnittsbeginn besitzt, der im Verhältnis zum Echosignal einer Grenzfläche zwischen Flüssigmedium/Metallprodukt (Int) definiert ist, sowie ein bestimmtes Periodenabschnitt-Intervall (Fe1, Fe2), und

- ein Verarbeitungsmodul (4v, 4s), das in der Lage ist, sukzessiv die Werte der Signale auszulesen, die für jeden Periodenabschnitt empfangen werden,

**dadurch gekennzeichnet, dass** die Vorrichtung folgendes beinhaltet:

- einen Speicherblock, der einen Erfassungsbereich (5v, 5s) beinhaltet, der sukzessiv jeden Wert mit Informationen zum entsprechenden Periodenabschnitt speichert, um echodynamische Signale (ECHODYN) zu bilden, wobei die zeitlichen Verläufe der Intensitätsmaxima der empfangenen Echosignale (Ds, Dv) echodynamische Verläufe bildet,

- ein Rechenmodul (6), das in der Lage ist, besagte echodynamische Signale zu bearbeiten und dabei einen Parameter (Pv, Ps) auswerten, der repräsentativ ist für das Vorhandensein von zwei aufeinanderfolgenden Höckern in der zeitlichen Verteilung der echodynamischen Signale und auf verdeckte Fehler hinweist, wobei das Rechenmodul darauf ausgerichtet ist, mit komplexen echodynamischen Signalen zu arbeiten, die aus der Konvolution von mindestens zwei elementaren Spitzen entstehen,

- ein Vergleichsmodul (7), das diesen Parameter mit Bezugsdaten vergleicht, die in einem speziellen Bereich (5r) des Speicherblocks gespeichert sind, und
- ein Alarmmodul (8), das je nach besagtem Vergleich ausgelöst wird,

wobei Vergleichsmodul (7) und Alarmmodul (8) so angeordnet sind, dass sie zusammenzuarbeiten, um den Bediener in Echtzeit bei verdeckten Fehlern des überprüften Metallproduktes (T) zu warnen, die eine bestimmte Toleranzgrenze überschreiten.

8. Vorrichtung nach Anspruch 7, **dadurch gekennzeichnet, dass** das Verarbeitungsmodul (4v, 4s) so angeordnet ist, dass es sukzessiv das Intensitätsmaximum der empfangenen Signale (Ds, Dv) in jedem Periodenabschnitt (Fe1, Fe2) ausliest, wobei der Speicherblock so angeordnet ist, dass er sukzessiv jedes Intensitätsmaximum der empfangenen Signale (Ds, Dv) speichert, in Übereinstimmung mit jedem Periodenabschnitt (Fe1, Fe2).

9. Vorrichtung nach Anspruch 7 und 8, **dadurch gekennzeichnet, dass** sie einen Schwellenwertdetektor beinhaltet, der in der Lage ist, mit dem Verarbeitungsmodul (4v, 4s) zusammenzuarbeiten, um nur Signalwerte an den Erfassungsspeicher zu übertragen, die einen bestimmten Schwellenwert (S1, S2) überschreiten.

10. Vorrichtung nach einem der Ansprüche 7 bis 9, **dadurch gekennzeichnet, dass** das Rechenmodul (6) so angeordnet ist, dass es mindestens eine der folgenden Operationen mit der zeitlichen Verteilung der echodynamischen Signale (ECHODYN) durchführt:

i) Bestimmung des Vorhandenseins von mindestens zwei Ableitungen Null auf echodynamischen Signalen ungleich Null;
ii) Dekonvolution der echodynamischen Signale;
iii) Auswertung der Breite der zeitlichen Verteilung bei einer bestimmten echodynamischen Intensität;
iv) Auswertung eines Integrals auf der zeitlichen Verteilung.

## Claims

1. An automatic method for testing metal products, in which:

a) a pulsed and recurring ultrasound beam (Em) is applied to a metal product (T) subjected to movement (H) relative to the beam,
b) the echo signals (Dv,Ds) returned by the metal product are captured, and
c) the echo signals are selected, in at least one determined part (Fe1, Fe2) of each recurrence (Tr), in order to identify any defects in the metal product, **characterized in that** step c) comprises

c1) the construction of a time curve (ECHODYN) of the echo intensities in the corresponding parts of a plurality of successive recurrences, called an echodynamic curve, the intensity of the echoes in the echodynamic curve being kept constant between two successive recurrences, the changes over time in the intensity maximums of received echo signals (Ds, Dv) forming echodynamic curves, and
c2) the analysis of fluctuations in the echodynamic signals represented by that echodynamic curve, in order to automatically detect complex echodynamic signals resulting from the convolution of at least two elementary peaks, which signify the presence of layered defects comprising the search for at least two bumps, which are successive in the signals of the echodynamic curve (ECHODYN).

2. A method according to claim 1, **characterized in that** step c2) comprises the measurement of at least one parameter of the echodynamic signals, chosen from among the area of the echodynamic curve, its width at mid-height, its height, and its width at the base.

3. A method according to one of the preceding claims, **characterized in that** step c) comprises a deconvolution of the echodynamic signals.

4. A method according to one of the preceding claims, **characterized in that**, in step c), only the echoes that exceed a chosen threshold (S1, S2) are processed.

5. A method according to one of the preceding claims, **characterized in that** said recurrences are periodic and of a chosen frequency (Fr), so that the echodynamic signal of a layered defect is obtained for at least ten successive recurrences.

6. A method according to claim 5, wherein the metal product to be tested is a tube (T), moved relative to the ultrasound beam in a spiral motion (H), **characterized in that** the circumferential pitch of emission recurrence on the tube is less than or equal to an angle in the vicinity of 1°, preferably less than 0.5°.

7. A device for an automatic in-line metal product testing installation, the installation comprising:

- at least one ultrasound sensor (2A, 2B), as well as means for moving (H) the sensor and/or a metal product to be tested, relative to one another,

- at least one circuit (1) for periodically exciting the sensor and to collect the return signals it senses,

- at least one time filter (3v, 3s) to successively isolate, within each period, at least one period portion,

each period portion comprising a portion start defined with respect to an echo signal of the interface between the liquid medium and metal product (Int), as well as a chosen period portion interval (Fe1, Fe2), and

- a processing module (4v, 4s) capable of successively extracting an intensity value of the signals received for each period portion,

**characterized in that** the device comprises:

- a memory block comprising an acquisition zone (5v, 5s) to successively store each value with a piece of information over a corresponding period portion, in order to form echodynamic signals (ECHODYN), changes over time in the intensity maximums of the received echo signals (Ds, Dv) forming echodynamic curves,

- a computing module (6) capable of working on said echodynamic signals to assess a parameter (Pv,Ps) representative of the presence of two successive bumps in the time distribution of the echodynamic signals, signifying layered defects, the computing module being adapted to work on complex echodynamic signals resulting from the convolution of at least two elementary peaks,

- a comparison module (7) for comparing that parameter with reference parameter data stored in a reserved area (5r) of the memory block, and

- an alert module (8) able to be triggered based on said comparison,

and **in that** the comparison module (7) is arranged to cooperate with the alert module (8) in order to alert, in real time, an operator to the presence of layered defects that exceed a predetermined tolerance threshold, in a metal product (T) being tested.

8. A device according to claim 7, **characterized in that**, the processing module (4v, 4s) being arranged to successively extract the maximum value of the intensity of the received signals (Dv, Ds) in each period portion (Fe1, Fe2), the memory block is arranged to successively store each maximum value of the intensity of the received signals (Dv, Ds) as a match for each period portion (Fe1,Fe2).

9. A device according to claim 7 and 8, **characterized in that** it comprises a threshold detector able to cooperate with the processing module (4v, 4s) to only transmit to the acquisition memory those intensity values that exceed a chosen threshold value (S1, S2).

10. A device according to one of the claims 7 to 9, **characterized in that** the computing module (6) is arranged to perform at least one operation on a time distribution of the echodynamic signals (ECHODYN), chosen from among the following operations:

    i) determining the existence of at least two null deviances on non-null electrodynamic signals;
    ii) deconvolution of the echodynamic signals;
    iii) assessing the width of the time distribution at a chosen echodynamic intensity;
    iv) assessing an integral of the time distribution.

## FIG.1

## FIG.2

A-SCAN

## FIG.3

ECHODYN
Dv

TEMPS

## FIG.4

ECHODYN

TEMPS

FIG.5A

ECHODYN

TEMPS

FIG.5B

S

δ=47°

C=0.3mm

p'=3.8mm

US

FIG.6A

FIG.6B

FIG.6C

FIG.6D

FIG.8

FIG.9

S

$\delta_A = 38°$   $\delta_B = -53°$   $P_B = 1.6mm$

B

A   $P'_A = 2.2mm$

US

## FIG.7A

ECHODYN
Ds

$40°$

## FIG.7B

1   2A

2B   3v   4v   5v   6   7   5r

Pv

3s   4s   5s   Ps   8

## FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 3614002
- GB 2075678 A

- FR 2471584